# EUROPEAN PATENT APPLICATION

(11) **EP 1 591 474 A1**
(43) Date of publication of application: **02.11.2005**
(21) Application number: 04101720.3
(22) Date of filing: 26.04.2004
(51) Int. Cl.: C08J 11/04, B29B 17/02

(54) **Process for the recovery of a polymer from a polymer coating on a support**

(71) Applicant: SOLVAY (Société Anonyme), 1050 Bruxelles (BE)
(72) Inventor: Bauer, Thomas, 46509 Xanten (DE); Kreber, Hans-Georg, 47495 Rheinberg (DE); Nover, Christoph, 47497 Rheinberg (DE); Saffert, Reinhard, 47475 Kamp-Lintfort (DE)
(74) Representative: Jacques, Philippe

(57) **Abstract**

Process for the recovery of a polymer from a polymer coating on a support, whereby the coated support is subjected to a high-pressure-water-jet by which at least a portion of the polymer coating is removed from the support and is carried away in the form of an aqueous wash of polymer compound in water, whereafter at least a portion of the polymer compound is recovered from the aqueous wash and is introduced into a process where polymer compound is contacted with a solvent or solvent mixture capable of dissolving the polymer compound, and the polymer is then precipitated from the solvent or solvent mixture in the form of solid polymer particles.

## Description

The present invention relates to a process for the efficient recovery of a polymer from a polymer coating on a support.

Polymers are widely used as coatings on supports, in particular on rigid supports, e.g. metal supports. When such articles are disposed of, there is frequently the need to separate the polymer from the support to allow separate recovery of different materials, in particular there is an increasing need for polymer recycling. Also if the articles are shredded and the polymer containing shredder residue should be used in feedstock recycling or energetic recycling, there is the need to reduce chlorine containing polymers like PVC, because of the sensitivity of these processes against chlorine.

The disposal of old cars constitutes one important example of these problems. It is not just the metal scrap which needs to be recycled, but the major problem is created by the considerable amount of plastics in the cars. The problem is aggravated by the fact, that a considerable portion, about 8%, of the plastic material is PVC (polyvinyl chloride), which because of its chlorine content requires additional efforts. The PVC is mainly contained in the underseal (about 65% of the total PVC in a car). While the relatively big bumpers of a car, which contain a great amount of plastics, can be removed at the beginning of any recycling operation, this is not possible with smaller parts and particularly not with the underseal which forms an integral part of the automobile body sheet iron.

In the past it has been tried to remove the plastic parts from any article, e.g. cars, whereafter the articles are shredded. For the reasons set out above, this plastic removal step is possible effectively only with major plastic parts like the bumpers, but not with coatings.

Energetic recycling has been suggested, whereby plastic containing material, e.g. the automobile shredder residue (ASR), is used in thermal recovery plants. Furthermore there is the possibility of feedstock recycling including also blast furnace which is recognized in Germany as a feedstock recycling. However, in all these cases only the crude oil based portion of the plastic material is required, the content of e.g. chlorine is even detrimental. Most operators require an upper limit of 1.2% chlorine in the plastic material to be recycled, which causes a problem for any articles comprising PVC, in particular most ASR, which frequently contain more chlorine, mostly around 2%. Such recycling therefore requires a preceding separation process in which a PVC-rich fraction is eliminated. The disadvantage of this process is, that the entire amount of ASR must be subjected to this separation process in order to remove the relatively small amount of PVC.

EP 0945481 in the name of SOLVAY discloses a process for recovering PVC from shredded articles. In particular it discloses a process for recycling an article based on at least one vinyl chloride polymer, in which
a) the article is shredded into fragments,
b) the fragments, which are substantially dry, are brought into contact with a substantially anhydrous solvent capable of dissolving the vinyl chloride polymer compound and forming an azeotrope with water,
c) the polymer (including the additives contained in the compound) dissolved in the solvent is precipitated by injecting steam in the solution thus obtained, which moreover leads to the stripping of the water-solvent azeotrope and so leaves behind a mixture essentially consisting of water and solid polymer compound particles, whereafter
d) the solvent is removed and
e) the polymer compound particles are recovered.

A variation of this process is disclosed in EP 1 232 204 (also in the name of SOLVAY) using as solvent an azeotropic mixture of solvent and water.

Further developments of these processes are disclosed in other patent applications to SOLVAY: EP 1 268 628 and FR 2833267 which relate respectively to the use of a phase separation agent during dissolution and to the use of atomization for recovering PVC from the solution. Even more recent developments are disclosed in FR 03.08690 and FR 03.08691 in the name of SOLVAY as well.

A mould cleaning jet system for cleaning steel and aluminum moulds is known under the name BICARJET® system. The BICARJET® system uses compressed air, water and a sodium bicarbonate based salt compound. The installation is formed with an adjustable pneumatic system. It is said to produce simple and delicate washes of deteriorated surfaces, up to removals of print residues, of oils, greases and paints from metal surfaces. It is said to be applicable to various moulds, auto interior insulation parts, paint and rust cleaning of surfaces etc. There are also other commercialized systems for the cleaning of surfaces using only sodium bicarbonate and water (without air).

It has now been found that a high-pressure-water-jet like in BICARJET® can effectively be used to remove polymer coatings from a support, preferably from a rigid support, e.g. metal, whereby the polymer is obtained in particles or lumps which can be dissolved in a solvent, whereafter the polymer can be precipitated from its solution and recovered.

Accordingly, the present invention concerns a process for the recovery of a polymer from a polymer coating on a support, whereby the coated support is subjected to a high-pressure-water-jet by which at least a portion of the polymer coating is removed from the support and is carried away in the form of an aqueous wash of polymer compound in water, whereafter at least a portion of the polymer compound is recovered from the aqueous wash and is introduced into a process where polymer compound is contacted with a solvent or solvent mixture capable of dissolving the polymer compound, and the polymer is then precipitated from the solvent or solvent mixture in the form of solid polymer particles.

The plastic concerned may be of any type. It may be a non-polar polymer, such as a polymer of ethylene (PE), propylene (PP), styrene (PS), carbonate (PC).... It may also be a polar polymer, such as a polymer of vinyl chloride (PVC) or of vinylidene chloride (PVDC), or PVDF. The term PVC should be understood to mean any homo- or copolymer containing at least 50% by weight of vinyl chloride, or even blends of those materials, such as PVC-ABS... The present invention gives good results with PVC coatings. Usually, these include besides PVC, usual additives like pigments, charges and especially, plasticizers. The present invention is very well suited for coatings made of what is called PVC plastisols, i.e. a compound including at least PVC, a plasticizer and usually a pigment.

Supports to which coatings (and especially, PVC plastisols coatings) are usually applied and which can be subjected to the present invention include any kind of sheet metals, in particular steel and aluminum plates with and without different stages of paint and also plastic plates. The invention is particularly suitable to remove the underseal from cars.

While PVC is the mostly used polymer for plastisol underbody coating, it very often may also contain copolymers like polyvinyl acetate. Polyvinylidene chloride (PVDC) and acrylic polymers are other kinds of plastic material to which the invention is applicable.

The invention comprises a process for the recovery of a polymer (or compound is it contains additives) from a polymer coating on a support, whereby the coated support is subjected to a high-pressure-water-jet by which the polymer coating is removed, e.g., mechanically removed, from the support and is carried away in the form of an aqueous suspension of polymer compound particles or lumps in water, whereafter the polymer compound contained in the aqueous wash is recovered by processes like filtration, centrifuge etc. and then the polymer is contacted with a solvent or solvent mixture capable of dissolving it and the polymer is precipitated from the solvent or solvent mixture in the form of solid particles.

The process of the invention can be advantageously applied to the recycling of old cars, whereby the underseal is first removed by the high-pressure-water-jet, whereafter the cars are shredded, metal is removed from the shredder product and the so obtained automotive shredder residue (ASR) is subjected to further recycling steps. It has been found that thereby the major source of PVC in the old car can be eliminated, so that the chlorine content in the ASR can be lowered to about 0,9%, making the ASR usable for recycling processes where chlorine is detrimental.

In its most simple embodiment a simple high-pressure-water-jet can be used in the process of the invention. Preferably, however, the water also contains an abrasive, in particular a water-soluble abrasive, which is subsequently carried away by dissolution. Sodium bicarbonate is a preferred abrasive. Other abrasives include water-soluble mineral powders with fine granulometry, e.g. salts, but also non-water-soluble mineral powders like sodium and calcium carbonates.

High-pressure-water-jets to be used within the frame of the present invention may be those known from typical two-step car wash installations whereby in a prewashing station the underbody is cleaned from adhering dirt and the main washing step is run under severe conditions, preferably using an abrasive like in the known MELTRON® cleaning system using sodium bicarbonate as abrasive. The length of such an installation could be about 30 m, the cars progressing with a velocity of about 4 m/min.

The system can be used with and without incorporation of air. Typically a nozzle having a diameter of 1-15 mm, preferably 8-12 mm, is applied using an air pressure of 0.02-35 bar, preferably 0.5-12 bar and most preferably 3-5 bar, the air consumption being 300-80001/min, preferably 2000-40001/min, the water consumption being 1-41/min. Sodium bicarbonate may be added in an amount of 0.3-1.5 kg/min preferably 0.5-0.8 kg/min; the sodium bicarbonate preferably is added to the water stream in the nozzle (Venturi system). The water temperature is preferably ambient, but the water may also be heated up to about 80°C (BICARJET® System).

If no air is incorporated into the jet stream, the water pressure may be 500-2000 bar, preferably 1500-2000 bar, the water consumption being 15-251/min and more sodium bicarbonate may be employed, e.g. 0.8-1.2 kg/min (Goetz System).

In this process step an aqueous wash will be obtained, in which particles, typically solid particles, of the polymer compound will be more or less suspended in the water. These polymer particles may be mechanically separated from the aqueous wash by classical methods, e.g. sedimentation and/or centrifugation and/or filtration and will be subjected to the further polymer recovering steps in still wet or dried state.

For the recovering of the polymer by dissolving and precipitating, any known process can be applied. However, the one protected by the above mentioned patent applications in the name of SOLVAY is most suitable and the disclosure of these prior art references are incorporated in the present description by reference in their entirety for all purposes. Such process and all its improvements when applied to PVC is commercially known under the name of Vinyloop® processes. By this part of the process of the present invention a reusable polymer compound is obtained.

In this process step the plastic material is dissolved in a solvent like methyl-ethyl-ketone or tetrahydrofurane or hexane or cyclohexane or cylcohexanone or appropriate mixtures, preferably at elevated temperatures, for instance 75-125°C. The polymer compound may then be recovered from the solution by adding a non-solvent and precipitating the polymer.

Finally a dry PVC powder may be obtained containing all original additives which were present in the underbody coating recipe. This means especially that this compound contains the original used plasticizers, filler (for example precipitated calcium carbonate), stabilizers and pigments (white pigment = titandioxide, black pigment = carbon black). This compound can be converted in combination with other recyclates, or further original additives to new defined compounds. These compounds can be converted like virgin compounds in classical thermoplastic processes, esp. destined for soft films (in building application or similar), soft profiles, soft hoses or similar end products.

As described before, one important aspect of the invention is its application in the recycling of old cars for the removal and recovery of the underseal.

The cars exempt from the underseal will then be subjected to a shredding process, well known in the art, whereafter metal is removed from the shredder product in a known manner, for instance by wind separation, density separation, magnetic separation or inductive separation. The so obtained automotive shredder residue (ASR), now exempt from the major metal and glass content and also PVC content, will then be subjected to further recycling steps principally known in the art, in particular to feedstock and energetic recycling. It can be introduced into a blast furnace to act there as a reduction material.

## Claims

1. Process for the recovery of a polymer from a polymer coating on a support, whereby the coated support is subjected to a high-pressure-water-jet by which at least a portion of the polymer coating is removed from the support and is carried away in the form of an aqueous wash of polymer compound in water, whereafter at least a portion of the polymer compound is recovered from the aqueous wash and is introduced into a process where polymer compound is contacted with a solvent or solvent mixture capable of dissolving the polymer compound, and the polymer is then precipitated from the solvent or solvent mixture in the form of solid polymer particles.

2. Process according to claim 1 **characterized in that** the solid polymer particles are mechanically separated from the aqueous wash before they are contacted with the solvent.

3. Process according to claim 1 or 2 **characterized in that** the polymer comprises PVC.

4. Process according to one of the preceding claims **characterized in that** the support is the bottom of a car.

5. Process according to one of the preceding claims **characterized in that** the high-pressure-water-jet contains an abrasive.

6. Process according to claim 5 **characterized in that** the abrasive is sodium bicarbonate.

7. Process for recycling old cars **characterized in that** the underseal is first removed by the process according to one of the preceding claims, whereafter the cars are shredded, metal is removed from the shredder product and the so obtained automotive shredder residue (ASR) is subjected to further recycling steps while the polymer compound from the underseal is separated from the aqueous wash and is recovered by first dissolving the polymer compound in an appropriate solvent and then precipitating the polymer compound from its solution.

8. Process according to claim 7 **characterized in that** the metal is removed by wind separation, density separation, magnetic separation or inductive separation.

9. Process according to claim 7 or 8 **characterized in that** the ASR is used for energetic and/or feedstock recycling.

10. Process according to claim 9 **characterized in that** the ASR is introduced into a blast furnace to act there as a reduction material.
